# EUROPEAN PATENT SPECIFICATION

(11) **EP 3 571 081 B1**
(45) Date of publication and mention of the grant of the patent: **27.10.2021**
(21) Application number: 18741657.3
(22) Date of filing: 11.01.2018
(51) Int. Cl.: B60K 15/067, B62D 27/06, F01N 13/18

(54) **A SUSPENSION DEVICE**
AUFHÄNGUNGSVORRICHTUNG
DISPOSITIF DE SUSPENSION

(30) Priority: 18.01.2017 SE 1750040
(43) Date of publication of application: 27.11.2019
(73) Proprietor: Scania CV AB, 151 87 Södertälje (SE)
(72) Inventor: BÖRJES, Markus, 125 44 Älvsjö (SE); PASIC, Anel, 151 48 Södertälje (SE)
(74) Representative: Scania CV AB
(86) International application number: PCT/SE2018/050019
(87) International publication number: WO 2018/135990

(56) References cited:
- EP-B1- 2 558 732
- EP-B1- 2 558 732
- WO-A1-2013/058699
- WO-A1-2013/058699
- WO-A1-2016/089316
- WO-A1-2016/089316
- DE-A1-102016 002 097
- US-A- 3 079 186
- US-A1- 2009 302 179
- US-A1- 2010 065 597
- US-A1- 2010 065 597

## Description

### TECHNICAL FIELD

The present invention relates to a suspension device and a vehicle comprising such a suspension device. The invention more specifically relates to a suspension device for attaching components to a vehicle structure, such as a frame.

### BACKGROUND

Attaching heavy components to a vehicle structure may be a time consuming process and the lack of space during assembly may also cause ergonomically unsound working conditions. There is therefore an increased demand for solutions where heavy components, such as fuel tanks, gas tanks or silencers, can be mounted/demounted in a quick and ergonomic way. During manufacturing of a vehicle the assembler typically has access from above or from the front when mounting such components on a vehicle frame. The components thus need to be mounted on the vehicle frame by means of suspension devices/couplings that are possible to fasten from above. However, during service operations when such components should be removed there are other requirements as the mechanic typically only has access from underneath the vehicle. This may cause problems in that the suspension devices used for mounting the component from above may be difficult to demount from below. Most known suspension devices require mounting and demounting from the same direction.

Document EP2558732 B1 discloses a suspension device for mounting for example a silencer on a vehicle frame. The suspension device comprises at least two bracket parts and at least two locking elements, wherein the locking elements are adapted to be screw fitted from different sides of the suspension device. The locking elements are cone-shaped screws. With this suspension device, only one of the locking elements needs to be released to take the suspension device apart. While the solution in EP2558732 B1 works well in some applications, there remains a need for an alternative suspension device for attaching a component to a vehicle structure in a secure and efficient manner.

### SUMMARY OF THE INVENTION

Despite known solutions in the field, there is still a need to develop an alternative suspension device for removable attachment of a component to a vehicle structure.

An object of the present invention is therefore to achieve an advantageous suspension device for removable attachment of a component to a vehicle structure, which enables attachment and disassembly from two different directions.

Another object of the present invention is to achieve an advantageous suspension device for removable attachment of a component to a vehicle structure, which provides a stiffer connection and improves the transfer of load to the vehicle structure.

These objects are achieved by a suspension device and a vehicle comprising such a suspension device according to the independent claims.

Hence, according to an aspect of the present invention a suspension device for removable attachment of a component to a vehicle structure is provided. The suspension device comprises: a first bracket adapted to be mounted on the component; a second bracket adapted to be mounted on the vehicle structure; and a first locking arrangement and a second locking arrangement, adapted to lock the first and second bracket to each other. The suspension device further comprises a locking sleeve, wherein the first locking arrangement and the second locking arrangement are adapted to be screwed into said locking sleeve from opposite sides, such that the first locking arrangement and the second locking arrangement applies a clamping force on the first and second bracket. The first locking arrangement may be adapted to abut the first bracket and the second bracket. The second locking arrangement may be adapted to abut the first bracket and the second bracket. By using a common locking sleeve the locking arrangements will move towards each other when being screwed into the locking sleeve. This way, the locking arrangements will form a clamping connection locking the first bracket and the second bracket to each other. Also, the locking sleeve enables separation of the first bracket and the second bracket by only unscrewing one of the locking arrangements. This way, a suspension device is achieved, which enables attachment/disassembly from two different directions.

The vehicle structure may be a vehicle frame extending essentially in parallel with the ground on which the vehicle is adapted to be driving. The component may be a gas tank assembly, a fuel tank, a silencer or similar. The first bracket and the second bracket may be adapted to be arranged with the longitudinal extension essentially perpendicular to the longitudinal extension of the vehicle structure.

The first locking arrangement may be referred to as a lower locking arrangement and the second locking arrangement may be referred to as an upper locking arrangement. It is to be understood that by lower and upper is meant positions closer to, or further away from, the ground on which the vehicle is adapted to be driving.

According to an embodiment of the invention the first bracket and the second bracket have corresponding shapes, wherein the first bracket is adapted to be arranged, such that it at least partially surrounds the second bracket. Suitably, the first bracket constitutes a female part and the second bracket constitutes a male part. The first bracket and the second bracket may be at least partially U-shaped. The first bracket and the second bracket may each comprise a base plate and two parallel side portions arranged perpendicularly to the base plate. The first bracket is suitably adapted to be arranged such that the base plate of the second bracket abuts the base plate of the first bracket and such that the side portions of the first bracket is outside the side portions of the second bracket. The locking sleeve is suitably arranged inside the second bracket, whereby the locking sleeve is surrounded by the base plate and the side portions of the second bracket.

The suspension device may comprise a latch arranged on the second bracket. The latch may be welded to the inside of the second bracket. The latch may be adapted to restrict movement of the locking sleeve in one direction. The latch may be adapted to restrict movement of the locking sleeve in direction upwards. The latch may be adapted to prevent rotation of the locking sleeve. The latch may comprise wings adapted to interact with protruding portions of the locking sleeve, such that the wings prevent rotation of the locking sleeve. This way, the locking arrangements can be screwed into the locking sleeve without needing an extra tool to hold the locking sleeve still. The locking sleeve is suitably able to move slightly in radial and longitudinal direction. This way, the locking arrangements are only subject to loads in the pulling direction which increases the lifetime of the locking arrangements. The locking sleeve may be at least partially cylindrical with a threaded inside.

According to an embodiment of the invention the first locking arrangement is arranged to interact with lower recesses in the first bracket and the second locking arrangement is arranged to interact with upper recesses in the first bracket, such that a pressing force is applied on the first bracket in direction towards the vehicle structure when the locking arrangements are screwed into the locking sleeve. The pressing force is suitably directed essentially perpendicularly to the clamping force. The clamping force may be directed essentially vertically and the pressing force may be directed essentially horizontally. The clamping force may thus prevent movement of the first bracket and the second bracket upwards and downwards. The recesses of the first bracket are suitably shaped, such that the locking arrangements presses against inclined contact surfaces of the recesses when the locking arrangements are screwed into the locking sleeve, resulting in a pressing force in direction towards the vehicle structure and thus the second bracket. The recesses of the first bracket are suitably formed in the side portions of the first bracket. The configuration of the locking arrangements and the recesses of the first bracket thus results in a pressing force in direction towards the second bracket and thereby a stiffer connection between the first and the second bracket. This way, the suspension device acts more like one integrated part instead of two separate brackets and the load of the component will thereby be transferred to the vehicle structure in a better way, instead of affecting the suspension device itself. The suspension device is thereby subject to less wear.

According to an embodiment of the invention the first locking arrangement and the second locking arrangement each comprises a fastener adapted to be screwed into the locking sleeve, and a transverse pin. Suitably, each locking arrangement is adapted to be arranged, such that the fastener extends through an opening in the pin, essentially perpendicularly to the extension of the pin. The fastener may be a screw, bolt or similar. The locking arrangements are suitably adapted to be arranged, such that the rotational axis of each fastener extends in parallel with the longitudinal extension of the first bracket and the second bracket. The locking sleeve is thus suitably adapted to be arranged with the centre axis parallel with the longitudinal extension of the first bracket and the second bracket. The pins of the first and second locking arrangements may be arranged to extend in parallel with the longitudinal extension of the vehicle structure. The pins of the first and second locking arrangements may be arranged in association with the recesses of the first bracket. The pin of the first locking arrangement and the pin of the second locking arrangement may be adapted to abut the first bracket and the second bracket. The pins of the locking arrangements may thus apply the clamping force on the first and the second bracket when the fasteners are tightened.

Suitably, the opening of each pin has a diameter which is smaller than the fastener head (screw head/bolt head). This way, the fastener head will abut the pin and the pin will restrict the movement of the fastener in one direction. If the fastener is inserted through the opening in the pin from above, the pin will restrict the movement of the fastener downwards and if the fastener is inserted through the opening in the pin from underneath, the pin will restrict the movement of the fastener upwards. By tightening the fasteners the pins of the locking arrangements will be pressed closer to each other and the first bracket and the second bracket will be clamped there between. The fasteners of the first locking arrangement and the second locking arrangement are suitably relatively long. This way, a long clamping length is achieved which is advantageous in that less subsidence will occur. The combined length of the two fasteners may correspond to at least two thirds of the longitudinal extension of the second bracket.

According to an embodiment of the invention the pin of the first locking arrangement is adapted to be arranged, such that it extends through slots in the second bracket. The slots in the second bracket may be inclined. The inclination of the slots may for example be between 40-50 degrees. The slots may be inclined downwards in direction towards the first bracket. The slots are suitably arranged in the side portions of the second bracket. The first locking arrangement is suitably attached to the second bracket prior to mounting the component with the first bracket. The fastener of the first locking arrangement may thus be screwed into the locking sleeve prior to attaching the second bracket to the vehicle structure. Suitably, the first bracket comprises a hanging portion, wherein the first bracket is adapted to be hanged with the hanging portion on the pin of the first locking portion. The hanging portion of the first bracket is suitably formed by the lower recesses of the first bracket. The first bracket may thus be adapted to be hanged with the hanging portion on the part of the pin of the first locking arrangement, which extends through the slots in the second bracket. Since the first locking arrangement is mounted on the second bracket prior to mounting the first bracket on the second bracket, the first locking arrangement forms a "third hand" solution. This means that the assembler can hang the first bracket (the component) on the first locking arrangement and does thus not have to hold the first bracket while mounting the second locking arrangement. This facilitates the attachment of the component to the vehicle structure.

The pin of the second locking arrangement may be adapted to be arranged in a groove formed by the upper recesses of the first bracket and a recess in an upper part of the second bracket. The cross-section of the groove may be essentially v-shaped where one side is an inclined contact surface of the first bracket and the other side is an inclined contact surface of the second bracket. The groove for the pin of the second locking arrangement is suitably formed in the upper part of the side portions of the first bracket and in the upper part of the side portions of the second bracket.

The first bracket and the second bracket may each have an attachment portion. The attachment portion of the first bracket is configured for attaching the first bracket to the component. The attachment portion of the second bracket is configured for attaching the second bracket to the vehicle structure.

With a suspension device according to the invention an efficient and ergonomic attachment of a component to a vehicle structure may be achieved. Prior to assembly the first locking arrangement is attached to the second bracket. The second bracket is attached to the vehicle structure by means of common fasteners and the first bracket is attached to the component. The component is thereafter mounted on the second bracket by hanging the first bracket on the pin of the first locking arrangement. The second locking arrangement is thereafter arranged from above at the upper parts of the first and second brackets. The fastener of the second locking arrangement is screwed into the locking sleeve whereby the locking sleeve is moved upwards towards the pin of the second locking arrangement. The pin of the first locking arrangement will move in the slots in the second bracket and the pin of the second locking arrangement will move in the groove, such that the first bracket and the second bracket are clamped. The inclinations of the recesses in the first bracket will also result in the pressing force moving the first bracket in direction towards the second bracket.

For removing the component from the vehicle structure it is possible to only release the fastener of the first locking arrangement. As the fastener of the first locking arrangement is unscrewed, the pin of the first locking arrangement will move downwards in the slots of the second bracket. The first bracket hanging on the pin will then also move downwards and it is possible to remove the first bracket even though the second locking arrangement is still fastened.

Further objects, advantages and novel features of the present invention will become apparent to one skilled in the art from the following details, and also by putting the invention into practice. Whereas embodiments of the invention are described below, it should be noted that it is not restricted to the specific details described.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates a vehicle according to an embodiment of the invention;
- Figure 2a-b: schematically illustrates a suspension device according to an embodiment of the invention;
- Figure 3a-c: schematically illustrates steps of mounting a suspension device according to an embodiment of the invention;
- Figure 4a-b: schematically illustrate the steps of demounting a suspension device according to an embodiment of the invention; and
- Figure 5a-c: schematically illustrates applications for a suspension device according to embodiments of the invention.

### DETAILED DESCRIPTION OF THE DRAWINGS

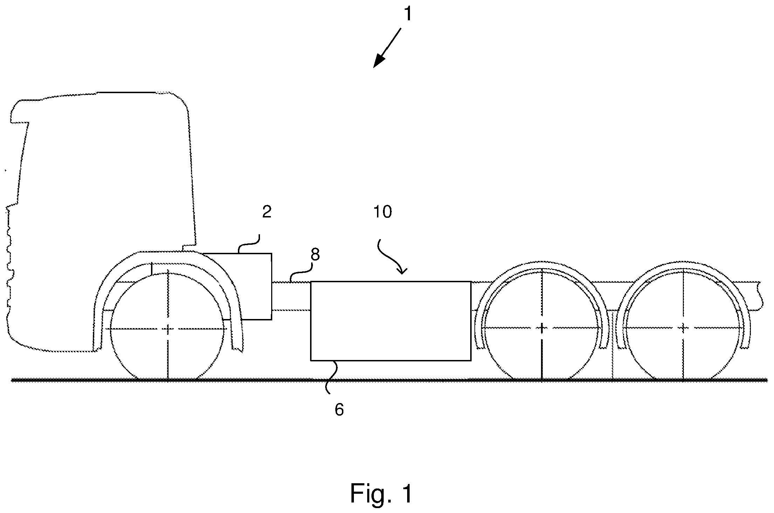

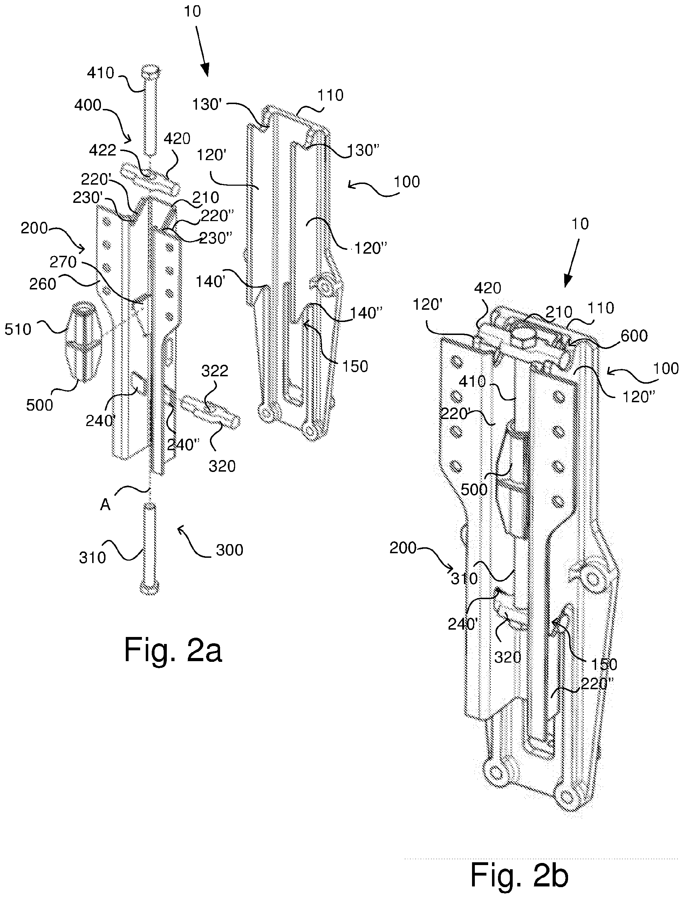

Figure 1 schematically shows a side view of a vehicle 1 comprising a propulsion unit 2. The propulsion unit 2 may be a gas engine, a diesel engine or and electric machine. The vehicle 1 may further comprise at least one component 6 attached to a vehicle structure 8. The component 6 may be a gas tank arrangement, a silencer, a diesel tank or similar. The vehicle structure 8 may be the vehicle frame. The component 6 is suitably attached to the vehicle structure 8 by means of a suspension device 10. The suspension device 10 may be a quick connection and is further described in Figures 2-5. The vehicle 1 may be a heavy vehicle, e.g. a truck or a bus. The vehicle may be manually operated, remotely operated or autonomously operated.

Figure 2a schematically illustrates an exploded view of a suspension device 10 for removable attachment of a component 6 to a vehicle structure 8 according to an embodiment of the invention. Figure 2b schematically illustrates a view of an assembled suspension device 10 for removable attachment of a component 6 to a vehicle structure 8 according to an embodiment of the invention. The suspension device 10 may be used in a vehicle 1 as disclosed in Figure 1. The suspension device 10 comprises: a first bracket 100 adapted to be mounted on the component 6; a second bracket 200 adapted to be mounted on the vehicle structure 8; and a first locking arrangement 300 and a second locking arrangement 400, adapted to lock the first and second bracket 100, 200 to each other. The suspension device 10 further comprises a locking sleeve 500, wherein the first locking arrangement 300 and the second locking arrangement 400 are adapted to be screwed into said locking sleeve 500 from opposite sides, such that the first locking arrangement 300 and the second locking arrangement 400 applies a clamping force on the first and second bracket 100, 200.

The first bracket 100 may be elongated with a cross-section that is essentially u-shaped. The first bracket 100 may thus comprise a base plate 110 and two parallel side portions 120', 120" extending perpendicularly to the base plate 110. The side portions 120', 120" may extend along at least a part of the longitudinal extension of the base plate 110. The side portions 120', 120" each comprises an upper recess 130', 130" and a lower recess 140', 140". The recesses 130', 130", 140', 140" are suitably configured such that each side portion 120', 120" has a waist. The lower recesses 140', 140" may form a hanging portion 150 of the first bracket 100. The first bracket 100 may also comprise an attachment portion (not shown) for attachment of the first bracket 100 to the component 6. The first bracket 100 may be made of castings.

The second bracket 200 may be elongated with a cross-section that is essentially u-shaped. The second bracket 200 may thus comprise a base plate 210 and two parallel side portions 220', 220" extending perpendicularly to the base plate 210. The side portions 220', 220" each comprises an upper recess 230', 230". The second bracket 200 also comprises slots 240', 240" one arranged in each side portion 220', 220". The slots 240', 240" may be inclined downwards towards the base plate 210. The second bracket 200 may also comprise an attachment portion 260 for attachment of the second bracket 200 to the vehicle structure 8. The second bracket 200 may be made of bent sheet metal.

The first locking arrangement 300 and the second locking arrangement 400 each comprises a fastener 310, 410 and a pin 320, 420. The pin 320, 420 comprises a centred opening 322, 422 through which the fastener 310, 410 is adapted to extend. The fastener 310, 410 and the pin 320, 420 are thus adapted to be arranged such that they extend essentially perpendicularly to each other. The fasteners 310, 410 are adapted to be arranged with the rotational axis A in parallel with the longitudinal extension of the second bracket 200. The pin 320 of the first locking arrangement 300 may be adapted to extend through the slots 240', 240" in the second bracket 200.

The threaded locking sleeve 500 is adapted to be arranged inside the second bracket 200, such that it is surrounded by the base plate 210 and the side portions 220', 220" of the second bracket 200. The second bracket 200 may comprise a latch 270 restricting movement of the locking sleeve 500 in direction upwards. The latch 270 may comprise wings (not shown) adapted to interact with protruding portions 510 of the locking sleeve 500, such that the wings prevent rotation of the locking sleeve 500. This way, the locking arrangements 300, 400 can be screwed into the locking sleeve 500 without needing an extra tool to hold the locking sleeve 500 still.

Figure 2b shows the suspension device 10 assembled but without the component and the vehicle structure. The first bracket 100 is arranged such that it surrounds the second bracket 200. Thus, the side portions 120', 120" of the first bracket 100 are arranged outside the side portions 220', 220" of the second bracket 200 and the base plate 110 of the first bracket 100 is arranged outside the base plate 210 of the second bracket 200. The first bracket 100 may be arranged such that the base plate 110 of the first bracket 100 abuts the base plate 210 of the second bracket. The first bracket 100 may be referred to as a female part and the second bracket 200 may be referred to as a male part. The first bracket 100 is hanging with the hanging portion 150 on the pin 320 of the first locking arrangement 300. The first bracket 100 is suitably hanging on a part of the pin 320 that is extending through the slots 240', 240" on the outside of the side portions 220', 220". The pin 420 of the second locking arrangement 400 rests in a groove 600 at the upper part of the first bracket 100 and the upper part of the second bracket 200. The groove 600 is formed by the upper recesses 130', 130" of the first bracket 100 and the upper recesses 230', 230" of the second bracket 200. The fasteners 310, 410 of the locking arrangements 300, 400 are screwed into the locking sleeve 500 from opposite directions and the pins 320, 420 of the locking arrangements 300, 400 thus applies a clamping force on the first and the second bracket 100, 200.

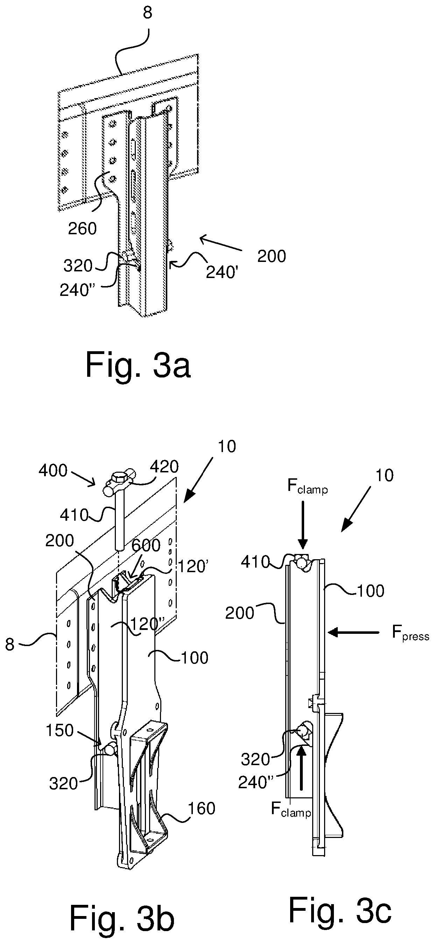

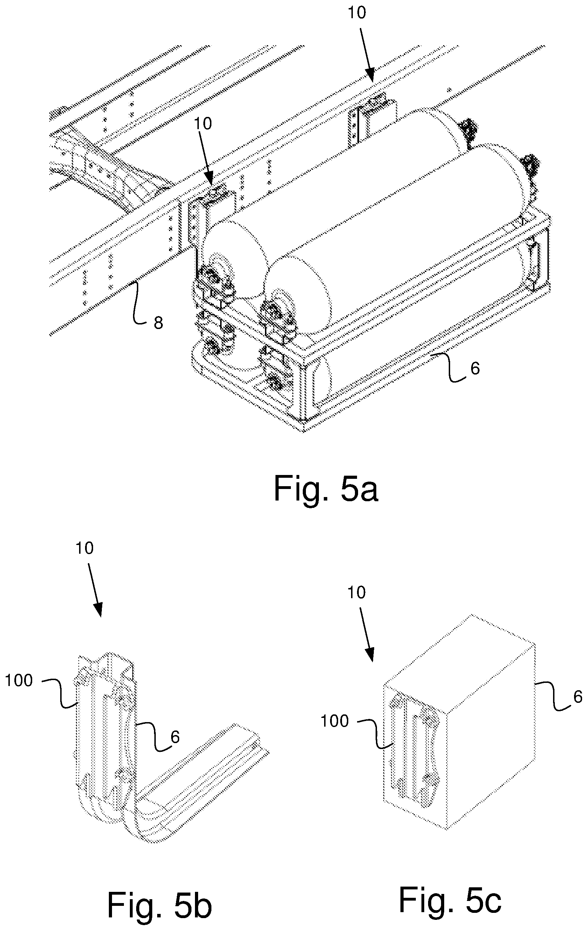

Figures 3a-3c schematically illustrate steps of mounting a suspension device 10 for removable attachment of a component 6 to a vehicle structure 8 according to an embodiment of the invention. The steps may be performed along a vehicle assembly line. For clarity no component 6 is attached to the suspension device 10 but examples of components 6 are shown in Figures 5a-5b. The suspension device 10 may be configured as disclosed in Figures 2a-2b.

The second bracket 200 is first attached to the vehicle structure 8 as illustrated in Figure 3a. The second bracket 200 may be attached to the vehicle structure 8 by means of ordinary fasteners, such as screws, bolts or similar, arranged at the attachment portion 260 of the second bracket 200. At this stage, the first locking arrangement 300 is already attached to the second bracket 200. That is, the fastener 310 of the first locking arrangement 300 is screwed into the locking sleeve 500 and the pin 320 of the first locking arrangement 300 is extending through the slots 240', 240" in the second bracket 200.

Subsequently, the first bracket 100 with the component is mounted on the second bracket 200. This is illustrated in Figure 3b. The first bracket 100 is arranged such that is surrounds the second bracket 200 and hangs with the hanging portion 150 on the pin 320 of the first locking arrangement 300. The first locking arrangement 300 thus serves as a "third hand" when attaching the component to the vehicle structure. When the first bracket 100 is arranged on the second bracket 200 the second locking arrangement 400 is arranged at the upper part of the first and second bracket 100, 200. The second locking arrangement 400 is suitably arranged with the pin 420 positioned in the groove 600 formed by the side portion 120', 120", 220', 220" of the first bracket 100 and the second bracket 200.

Figure 3c illustrates a stage when the fastener 410 of the second locking arrangement has been screwed into the locking sleeve 500 and is tightened. When the fastener 310 is screwed into the locking sleeve 500 the locking sleeve 500 moves upwards and the pin 320 of the first locking arrangement 300 thus moves upwards in the slots 240', 240". The pins 320, 420 of the first and second locking arrangements 300, 400 thus move towards each other and thereby apply a clamping force F_{clamp} on the first bracket 100 and the second bracket 200. Also, due to the upper and lower recesses 130', 130", 140', 140" in the first bracket 100 and the configuration of the pins 320, 420, a pressing force Fₚᵣₑₛₛ will be applied on the first bracket 100, such that it is pressed towards the vehicle structure 8 and thus the second bracket 200. With the first bracket 100 and the second bracket 200 tightly and firmly connected, the load on the first bracket 100 will be transferred to the vehicle structure 8 in a better way, instead of affecting the suspension device 10.

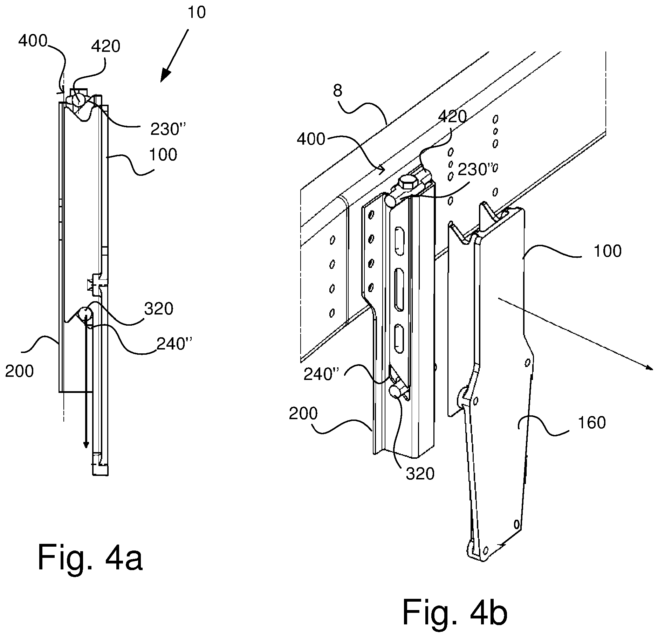

Figures 4a-4b schematically illustrate the steps of demounting a suspension device 10 for removing a component 6 from a vehicle structure 8 according to an embodiment of the invention. The suspension device 10 may be arranged on a vehicle 1 as disclosed in Figure 1. The steps may for example be performed by a mechanic during service operations. For clarity no component 6 is attached to the suspension device 10. The suspension device 10 may be configured as disclosed in Figures 2a-2b and Figures 3a-3c.

During service operations access is typically only available from underneath the vehicle 1. The fastener 310 of the first locking arrangement 300 is thus suitably released, such that the pin 320 of the first locking arrangement 300 moves downwards in the slots 240', 240". The first bracket 100, which is hanging on the pin 320 of the first locking arrangement 300, will thereby also move downwards, as illustrated in the side view of the suspension device 10 in Figure 4a. The pin 420 of the second locking arrangement 400 will maintain its position abutting the inclined contact surfaces of the recesses 230', 230" of the second bracket 200. The second locking arrangement 400 thereby no longer abuts the first bracket 100 and no longer applies any clamping force on the first bracket 100. The first bracket 100 can thereby be lifted off the second bracket 200 as illustrated in Figure 4b.

Figures 5a-5c illustrates applications for a suspension device 10 for removable attachment of a component 6 to a vehicle structure 8 according to embodiments of the invention. The suspension device 10 may be configured as disclosed in Figure 2a-2b, 3a-3c and 4a-4b. Figure 5a illustrates an application for the suspension device 10 where the component 6 is a gas tank arrangement and the vehicle structure 8 is a vehicle frame. As illustrated in Figure 5a the component 6 may be attached to the vehicle structure 8 by means of one or more suspension devices 10, for example two suspension devices 10. Figure 5b illustrates how the suspension device 10 may be used for attachment of a fuel tank bracket 6 to a vehicle structure. In Figure 5b only the first bracket 100 is shown. Figure 5c illustrates an application for the suspension device 10 where the component 6 is a silencer. In Figure 5c only the first bracket 100 is shown.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments.

## Claims

1. A suspension device (10) for removable attachment of a component (6) to a vehicle structure (8), the suspension device (10) comprising:
a first bracket (100) adapted to be mounted on the component (6);
a second bracket (200) adapted to be mounted on the vehicle structure (8); and
a first locking arrangement (300) and a second locking arrangement (400), adapted to lock the first and second bracket (100; 200) to each other, **characterised in that** the suspension device (10) comprises a locking sleeve (500), and **in that** the first locking arrangement (300) and the second locking arrangement (400) each comprises a transverse pin (320; 420) and a fastener (310; 410) extending through an opening (322; 422) in the transverse pin (320; 420), wherein the fasteners (310; 410) of the first locking arrangement (300) and the second locking arrangement (400) are adapted to be screwed into said locking sleeve (500) from opposite sides, such that the transverse pins (320; 420) of the first locking arrangement (300) and the second locking arrangement (400) apply a clamping force (F_{clamp}) on the first and second bracket (100; 200).

2. The suspension device (10) according to claim 1, wherein the first locking arrangement (300) is adapted to interact with lower recesses (140', 140") of the first bracket (100) and the second locking arrangement (400) is adapted to interact with upper recesses (130', 130") of the first bracket (100), the lower recesses (140', 140") and upper recesses (130', 130") each comprises inclined contact surfaces such that a pressing force (Fₚᵣₑₛₛ) is applied on the first bracket (100) in direction towards the vehicle structure (8), when the locking arrangements (300; 400) are screwed into the locking sleeve (500).

3. The suspension device (10) according to claim 2, wherein the pressing force (Fₚᵣₑₛₛ) is directed essentially perpendicularly to the clamping force (F_{clamp}).

4. The suspension device (10) according to any one of the preceding claims, wherein the transverse pin (320) of the first locking arrangement (300) is adapted to be arranged, such that it extends through slots (240', 240") in the second bracket (200).

5. The suspension device (10) according to any one of the preceding claims, wherein the first bracket (100) comprises a hanging portion (150), wherein the first bracket (100) is adapted to be hanged with the hanging portion (150) on the transverse pin (320) of the first locking arrangement (300).

6. The suspension device (10) according to any of the preceding claims, wherein the first bracket (100) is adapted to be arranged such that it at least partially surrounds the second bracket (200).

7. The suspension device (10) according to any of the preceding claims, wherein the first bracket (100) and the second bracket (200) are at least partially U-shaped.

8. A vehicle (1) comprising a suspension device (10) according to any of the preceding claims for removable attachment of a component (6) to the vehicle structure (8).

## Patentansprüche

1. Aufhängungsvorrichtung (10) zur abnehmbaren Anbringung eines Bauteils (6) an einem Fahrzeugaufbau (8), wobei die Aufhängungsvorrichtung (10) aufweist:
einen ersten Halter (100), der dazu ausgeführt ist, an dem Bauteil (6) befestigt zu werden,
einen zweiten Halter (200), der dazu ausgeführt ist, an dem Fahrzeugaufbau (8) befestigt zu werden, und
eine erste Verriegelungsanordnung (300) und eine zweite Verriegelungsanordnung (400), die dazu ausgeführt sind, den ersten und zweiten Halter (100; 200) aneinander zu arretieren, **dadurch gekennzeichnet, dass** die Aufhängungsvorrichtung (10) eine Klemmbuchse (500) aufweist und dass die erste Verriegelungsanordnung (300) und die zweite Verriegelungsanordnung (400) jeweils einen Querstift (320; 420) und ein sich durch eine Öffnung (322; 422) in dem Querstift (320; 420) erstreckendes Befestigungselement (310; 410) aufweisen, wobei die Befestigungselemente (310; 410) der ersten Verriegelungsanordnung (300) und der zweiten Verriegelungsanordnung (400) dazu ausgeführt sind, von entgegengesetzten Seiten in die Klemmbuchse (500) geschraubt zu werden, so dass die Querstifte (320; 420) der ersten Verriegelungsanordnung (300) und der zweiten Verriegelungsanordnung (400) eine Klemmkraft (F_{clamp}) auf den ersten und zweiten Halter (100; 200) ausüben.

2. Aufhängungsvorrichtung (10) nach Anspruch 1, bei der die erste Verriegelungsanordnung (300) dazu ausgeführt ist, mit unteren Ausnehmungen (140', 140") des ersten Halters (100) zusammenzuwirken und die zweite Verriegelungsanordnung (400) dazu ausgeführt ist, mit oberen Ausnehmungen (130', 130") des ersten Halters (100) zusammenzuwirken, wobei die unteren Ausnehmungen (140', 140") und oberen Ausnehmungen (130', 130") jeweils geneigte Auflageflächen solchermaßen aufweisen, dass eine Presskraft (Fₚᵣₑₛₛ) auf den ersten Halter (100) in einer Richtung zum Fahrzeugaufbau (8) hin ausgeübt wird, wenn die Verriegelungsanordnungen (300; 400) in die Klemmbuchse (500) geschraubt werden.

3. Aufhängungsvorrichtung (10) nach Anspruch 2, bei der die Presskraft (Fₚᵣₑₛₛ) im Wesentlichen rechtwinklig zur Klemmkraft (F_{clamp}) gerichtet ist.

4. Aufhängungsvorrichtung (10) nach einem der vorhergehenden Ansprüche, bei der der Querstift (320) der ersten Verriegelungsanordnung (300) dazu ausgeführt ist, solchermaßen angeordnet zu werden, dass er durch Schlitze (240', 240") in dem zweiten Halter (200) verläuft.

5. Aufhängungsvorrichtung (10) nach einem der vorhergehenden Ansprüche, bei der der erste Halter (100) einen Hängeabschnitt (150) aufweist, wobei der erste Halter (100) dazu ausgeführt ist, mit dem Hängeabschnitt (150) auf dem Querstift (320) der ersten Verriegelungsanordnung (300) aufgehängt zu werden.

6. Aufhängungsvorrichtung (10) nach einem der vorhergehenden Ansprüche, bei der der erste Halter (100) dazu ausgeführt ist, solchermaßen angeordnet zu werden, dass er den zweiten Halter (200) zumindest teilweise umgibt.

7. Aufhängungsvorrichtung (10) nach einem der vorhergehenden Ansprüche, bei der der erste Halter (100) und der zweite Halter (200) zumindest teilweise U-förmig sind.

8. Fahrzeug (1) mit einer Aufhängungsvorrichtung (10) nach einem der vorhergehenden Ansprüche zur abnehmbaren Anbringung eines Bauteils (6) an dem Fahrzeugaufbau (8).

## Revendications

1. Dispositif de suspension (10) pour la fixation amovible d'un composant (6) à une structure de véhicule (8), le dispositif de suspension (10) comprenant :
un premier support (100) adapté pour être monté sur le composant (6) ;
un deuxième support (200) adapté pour être monté sur la structure de véhicule (8) ; et
un premier agencement de verrouillage (300) et un deuxième agencement de verrouillage (400), adapté pour verrouiller les premier et deuxième supports (100 ; 200) les uns aux autres, **caractérisé en ce que** le dispositif de suspension (10) comprend un manchon de verrouillage (500), et **en ce que** le premier agencement de verrouillage (300) et le deuxième agencement de verrouillage (400) comprennent chacun une broche transversale (320 ; 420) et une attache (310 ; 410) s'étendant à travers une ouverture (322 ; 422) dans la broche transversale (320 ; 420), dans lequel les attaches (310 ; 410) du premier dispositif de verrouillage (300) et du second dispositif de verrouillage (400) sont adaptés pour être vissés dans ledit manchon de verrouillage (500) depuis des côtés opposés, de telle sorte que les broches transversales (320 ; 420) du premier agencement de verrouillage (300) et du deuxième agencement de verrouillage (400) appliquent une force de serrage (F_{serrage}) sur le premier et le deuxième support (100 ; 200).

2. Dispositif de suspension (10) selon la revendication 1, dans lequel le premier agencement de verrouillage (300) est adapté pour interagir avec des évidements inférieurs (140', 140") du premier support (100) et du deuxième dispositif de verrouillage (400) est adapté pour interagir avec des évidements supérieurs (130', 130") du premier support (100), les évidements inférieurs (140', 140") et des évidements supérieurs (130', 130") comprennent chacune des surfaces de contact inclinées de sorte qu'une force de pression (Fₚᵣₑₛₛᵢₒₙ) est appliquée sur le premier support (100) en direction de la structure de véhicule (8), lorsque les dispositifs de verrouillage (300 ; 400) sont vissées dans le manchon de verrouillage (500).

3. Dispositif de suspension (10) selon la revendication 2, dans lequel la force de pression (Fₚᵣₑₛₛᵢₒₙ) est dirigée essentiellement perpendiculairement à la force de serrage (F_{serrage}) .

4. Dispositif de suspension (10) selon l'une quelconque des revendications précédentes, dans lequel la broche transversale (320) du premier dispositif de verrouillage (300) est adaptée pour être disposée, de sorte qu'elle s'étend à travers des fentes (240', 240") dans le deuxième support (200).

5. Dispositif de suspension (10) selon l'une quelconque des revendications précédentes, dans lequel le premier support (100) comprend une partie de suspension (150), dans lequel le premier support (100) est adapté pour être suspendu avec la partie de suspension (150) sur la broche transversale (320) du premier agencement de verrouillage (300).

6. Dispositif de suspension (10) selon l'une quelconque des revendications précédentes, dans lequel le premier support (100) est adapté pour être agencé de telle sorte qu'il entoure au moins partiellement le deuxième support (200).

7. Dispositif de suspension (10) selon l'une quelconque des revendications précédentes, dans lequel le premier support (100) et le deuxième support (200) sont au moins partiellement en forme de U.

8. Véhicule (1) comprenant un dispositif de suspension (10) selon l'une quelconque des revendications précédentes pour la fixation amovible d'un composant (6) à la structure (8) du véhicule.
